# EUROPEAN PATENT APPLICATION

(11) **EP 2 009 655 A1**
(43) Date of publication of application: **31.12.2008**
(21) Application number: 07741411.8
(22) Date of filing: 11.04.2007
(51) Int. Cl.: H01G 9/155

(54) **ELECTRIC DOUBLE LAYER CAPACITOR**

(30) Priority: 19.04.2006 JP 2006115906
(71) Applicant: Nisshinbo Industries, Inc., Chuo-ku, Tokyo 103-8650 (JP)
(72) Inventor: NOZU, Ryutaro, Chiba-shi Chiba 267-0056 (JP); IIZUKA, Mami, Chiba-shi Chiba 267-0056 (JP)
(74) Representative: Vossius & Partner
(86) International application number: PCT/JP2007/057975
(87) International publication number: WO 2007/123033

(57) **Abstract**

A case (2) houses positive electrodes and negative electrodes of an electrical double layer capacitor. An insulator (10) is so arranged as to cross four surfaces around the case (2). Positive electrode side terminals (21) are welded on respective positive electrodes (20) of a capacitor main body (11). The positive side terminals (21) are bundled together, and are electrically connected to a connection portion (22) which is formed on an inner wall surface of a divided surface (3A) of a first side surface (3) constituting the case (2). Negative electrode side terminals (31) are welded on respective negative electrodes (30) of the capacitor main body (11). The negative electrode side terminals (31) are bundled together, and are electrically connected to a connection portion (32) which is formed on an inner wall surface of a divided surface (3B) of the first side surface (3) constituting the case (2).

## Description

### TECHNICAL FIELD

The present invention relates to an electric double layer capacitor that is used as an automobile power supply, an electric power storage power supply, etc.

### BACKGROUND ART

The electric double layer capacitor is an electrochemical device that is made up of a positive electrode, a negative electrode, and a solution (electrolyte solution) containing positive ions and negative ions, and in which negative ions are adsorbed or emitted to the positive electrode and positive ions are adsorbed or emitted to the negative electrode by using very thin insulating layers which can be produced on interfaces between the respective positive and negative electrodes and the electrolyte solution, that is, an electric double layer as dielectric, thereby enabling electrification to be charged or discharged (for example, refer to JP 2002-289486 A).

### DISCLOSURE OF THE INVENTION

### Problems to be Solved by the Invention

Incidentally, in the electric double layer capacitor according to the above conventional art, the positive electrode and the negative electrode are housed within a case made of thin material that is low in rigidity, such as aluminum laminate. For that reason, there arises such a problem that when the electric double layer capacitor is used for a long period of time, damage such as a pin hole may be formed in the case. Also, the positive electrode terminal and the negative electrode terminal are projected from a capacitor main body, and lead wires are connected to the projected terminals. For that reason, the case must be upsized for the portions of the respective terminals which are projected from the capacitor main body when the capacitor main body is housed in the case, thereby making it difficult to make the entire electric double layer capacitor including the case compact.

The present invention has been made in view of the above problem, and therefore an object of the present invention is to provide an electric double layer capacitor which is capable of enhancing the rigidity of the case that houses the positive electrode and the negative electrode, and making the entire configuration compact.

### Means for solving the Problems

In order to solve the problems in the conventional art, an electric double layer capacitor according to the present invention includes: a pair of electrodes at least one of which is a polarizable electrode; a separator; and an electrolyte solution, wherein a case that houses the pair of electrodes, the separator, and the electrolyte solution is made of an electrically conductive material, the case is divided in two to give one case and another case, an insulator is arranged along a boundary between the one case and the other case to fix the one case and the other case by the insulator, the one case is connected with a positive electrode of the pair of electrodes, and the other case is connected with a negative electrode of the pair of electrodes.

Moreover, the case that houses the pair of electrodes, the separator, and the electrolyte solution may be made of a metal material and formed in a rectangular solid configuration, and electrical conductivity may be 1×10⁻⁷Scm⁻¹ or lower along the boundary between the one case and the other case.

Moreover, the one case that is connected with the positive electrode may be made of aluminum or aluminum alloy.

Moreover, the insulator may surround the case so as to cross three surfaces or four surfaces of the six surfaces of the case.

Further, the insulator may surround the case so as to cross four sides of the twelve sides of the case or extend along six sides of the twelve sides of the case.

Further, the insulator may be made of a material selected from a thermosetting resin, a thermoplastic resin, a rubber, a fluorine-containing resin, and inorganic oxide.

Moreover, a metal material of the case may be one kind or an alloy of two or more kinds selected from iron, nickel, copper, chrome, aluminum, zinc, magnesium, and manganese, and may have an electrical conductivity of 1×10⁻⁴Scm⁻¹ or higher.

Another aspect of the present invention is a series type electric double layer capacitor, wherein a positive electrode portion of one capacitor and a negative electrode portion of other capacitor of a plurality of the electric double layer capacitors are arranged so as to be in contact with each other.

Another aspect of the present invention is a parallel type electric double layer capacitor, wherein a positive electrode portion of one capacitor and a positive electrode portion of other capacitor, and a negative electrode portion of the one capacitor and a negative electrode portion of the other capacitor of a plurality of the electric double layer capacitors are arranged so as to be in contact with each other.

### BRIEF DESCRIPTION OF THE DRAWINGS

Fig. 1 is an exploded perspective view showing an electric double layer capacitor according to a first embodiment of the present invention.
Fig. 2 is a perspective view showing a state in which the electric double layer capacitor according to the first embodiment of the present invention is assembled.
Fig. 3 is a cross sectional view when viewed from the direction indicated by an arrow II-II of Fig. 2.
Fig. 4 is a partial cross-sectional view showing a joint of divided surfaces according to a first modified example of the present invention.
Fig. 5 is a partial cross-sectional view showing a joint of divided surfaces according to a second modified example of the present invention.
Fig. 6 is a partial cross-sectional view showing a joint of divided surfaces according to a third modified example of the present invention.
Fig. 7 is a partial cross-sectional view showing a joint of divided surfaces according to a fourth modified example of the present invention.
Fig. 8 is a partial cross-sectional view showing a joint of divided surfaces according to a fifth modified example of the present invention.
Fig. 9 is a partial cross-sectional view showing a joint of divided surfaces according to a sixth modified example of the present invention.
Fig. 10 is a partial cross-sectional view showing a joint of divided surfaces according to a seventh modified example of the present invention.
Fig. 11 is a partial cross-sectional view showing a specific configuration of a joint of divided surfaces according to an eighth modified example of the present invention.
Fig. 12 is a partial cross-sectional view showing a specific configuration of a joint of divided surfaces according to a ninth modified example of the present invention.
Fig. 13 is a partial cross-sectional view showing a specific configuration of a joint of divided surfaces according to a tenth modified example of the present invention.
Fig. 14 is a partial cross-sectional view showing a state in which a negative electrode side terminal is fixed to a case according to an eleventh modified example of the present invention.
Fig. 15 is a partial cross-sectional view showing a state in which a negative electrode side terminal is fixed to a case according to a twelfth modified example of the present invention.
Fig. 16 is an exploded perspective view showing an electric double layer capacitor according to a thirteenth modified example of the present invention.
Fig. 17 is a partial cross-sectional view showing a case and a pressure regulating valve according to a fourteenth modified example of the present invention.
Fig. 18 is a partial cross-sectional view showing a case and a pressure regulating valve according to a fifteenth modified example of the present invention.
Fig. 19 is a partial cross-sectional view showing a case and a pressure regulating valve according to a sixteenth modified example of the present invention.
Fig. 20 is a perspective view showing an electric double layer capacitor according to a second embodiment of the present invention.
Fig. 21 is a perspective view showing an electric double layer capacitor according to a third embodiment of the present invention.
Fig. 22 is a perspective view showing an electric double layer capacitor according to a seventeenth modified example of the present invention.
Fig. 23 is a perspective view showing an electric double layer capacitor according to an eighteenth modified example of the present invention.

### BEST MODE FOR CARRYING OUT THE INVENTION

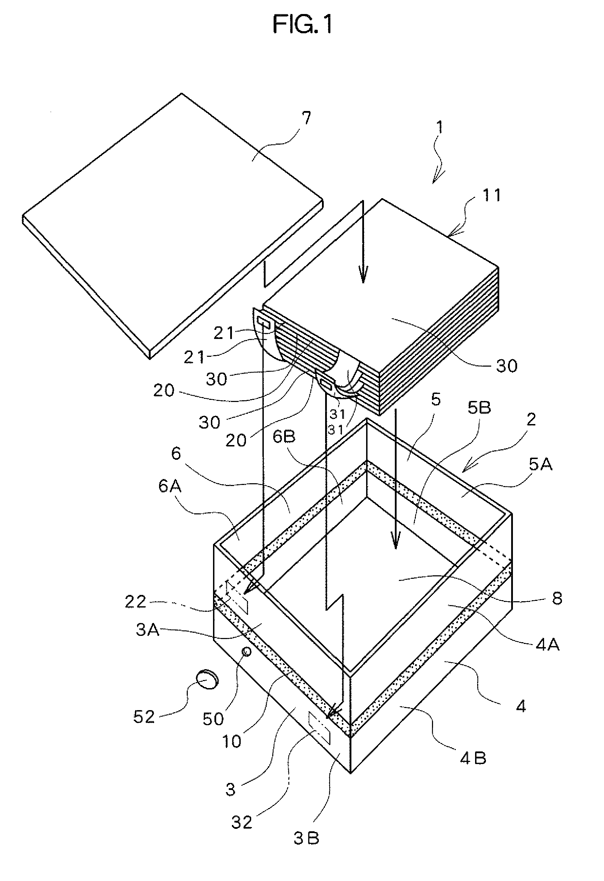

A description is given of an electric double layer capacitor according to a first embodiment of the present invention with reference to Figs. 1 to 4.

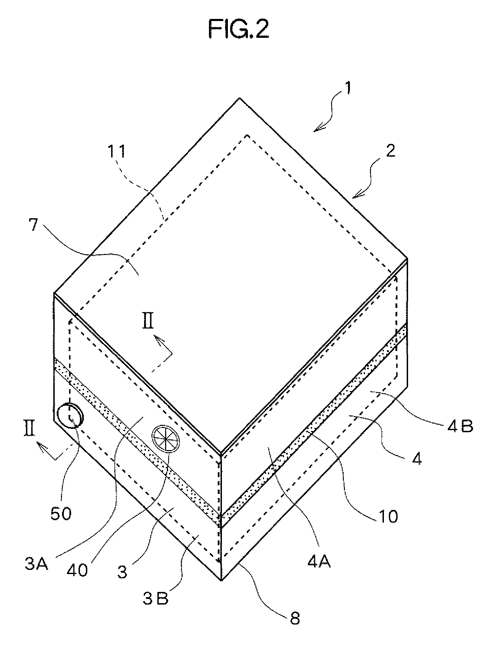

Referring to Figs. 1 and 2, an electric double layer capacitor 1 includes a case 2, an insulator 10, and a capacitor main body 11.

The case 2 includes first, second, third, and fourth side surfaces 3, 4, 5, and 6, and lids 7 and 8. Also, the first to fourth side surfaces 3, 4, 5, and 6 are divided into two pieces, respectively. The first side surface 3 is divided into a pair of divided surfaces 3A and 3B, and the second side surface 4 is divided into a pair of divided surfaces 4A and 4B. Also, the third side surface 5 is divided into a pair of divided surfaces 5A and 5B, and the fourth side surface 6 is divided into a pair of divided surfaces 6A and 6B. The divided surfaces 3A, 4A, 5A, and 6A, and the lid 7 correspond to "one case" as defined in the scope of claims, and the divided surfaces 3B, 4B, 5B, and 6B, and the lid 8 correspond to "another case" as defined in the scope of claims.

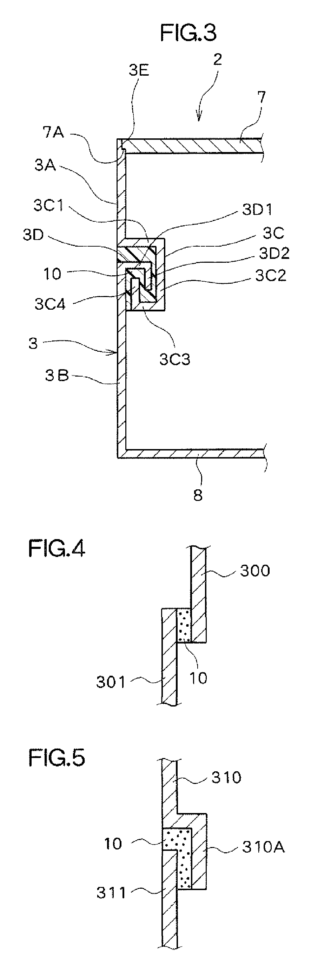

In this example, as shown in Fig. 3, the divided surface 3A of the first side surface 3 extends vertically, and an upper end side of the divided surface 3A forms a substantially L-shaped notch 3E, and a lower end side thereof forms a bend 3C which is bent in a substantially L-shaped configuration at four stages. The divided surface 3B of the first side surface 3 extends vertically, and an upper end side of the divided surface 3B forms a bend 3D which is bent in a substantially L-shaped configuration at two stages. The bend 3C and the bend 3D do not come in direct contact with each other, and are joined together through the insulator 10.

The bend 3C is made up of a first bend 3C1 that is bent in a substantially L-shaped configuration horizontally toward the inner direction of the case 2 from the lower end side of the divided surface 3A of the first side surface 3, a second bend 3C2 that is bent downward in a substantially L-shaped configuration from the first bend 3C1, a third bend 3C3 that is bent horizontally toward the outer direction of the case 2 from the second bend 3C2, and a fourth bend 3C4 that is bent in a substantially L-shaped configuration upward from the third bend 3C3.

Also, the bend 3D is made up of a first bend 3D1 that is bent in a substantially L-shaped configuration toward a space between the first bend 3C1 and the fourth bend 3C4 horizontally toward the inner direction of the case 2 from the upper end side of the divided surface 3B, and a second bend 3D2 that is bent in a substantially L-shaped configuration toward a space between the second bend 3C2 and the fourth bend 3C4 downward from the first bend 3D1. Also, each of the second to fourth side surfaces 4, 5, and 6 is configured in the same manner as that of the first side surface 3, and has the notch and the bends (both not shown).

In this embodiment, the description is given of an example in which the bends 3C and 3D are provided at the divided surfaces 3A and 3B of the first side surface 3, and the second to fourth side surfaces 4 to 6 are configured in the same manner as that of the first side surface 3. The above embodiment can be replaced with the following modified examples.

A first modified example is shown in Fig. 4. In the first modified example, each of the first to fourth side surfaces 3 to 6 is made up of a divided surface 300 that extends straight in one direction, and a divided surface 301 that extends straight in another direction, likewise. Those divided surfaces 300 and 301 are joined with the insulator 10.

A second modified example is shown in Fig. 5. In the second modified example, each of the first to fourth side surfaces 3 to 6 is made up of a divided surface 310 having a bend 310A with one end side bent in a substantially L-shaped configuration, and a divided surface 311 that extends straight in one direction. The bend 310A of the divided surface 310 and the divided surface 311 are joined with the insulator 10.

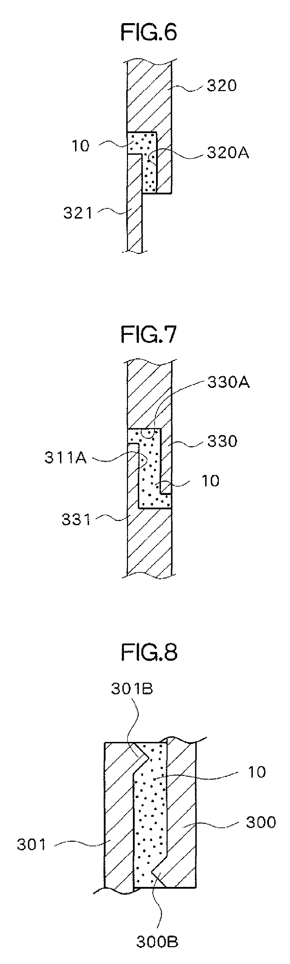

A third modified example is shown in Fig. 6. In the third modified example, each of the first to fourth side surfaces 3 to 6 is made up of a divided surface 320 having a notch 320A which is notched in a substantially L-shaped configuration at one end side, and a divided surface 321 that extends straight in one direction. The notch 320A of the divided surface 320 and the divided surface 321 are joined with the insulator 10.

A fourth modified example is shown in Fig. 7. In the fourth modified example, each of the first to fourth side surfaces 3 to 6 is made up of a divided surface 330 having a notch 330A which is notched in a substantially L-shaped configuration at one end side, and a divided surface 331 having a notch 331A which is notched in a substantially L-shaped configuration at one end side. The notches 330A and 331A of those divided surfaces 330 and 331 are joined with the insulator 10.

As modified examples of the bends 3C and 3D, the first to fourth modified examples are described above. However, in the modified example of the bends 3C and 3D, the case 2 has only to be formed in a state where one case of the case 2, and another case, are electrically insulated from each other. The modified examples of the bends 3C and 3D are not limited to the above-mentioned configurations.

Also, the following modified examples can be applied to the configuration of the facing surfaces of the divided surface 300 and the divided surface 301 described in the first modified example.

A fifth modified example is shown in Fig. 8. In the fifth modified example, a projection 300B having a substantially triangular configuration in cross section is projected from at least a part of the facing surface of the divided surface 300 which faces the divided surface 301. Also, a projection 301B having a substantially triangular configuration in cross section is projected from at least a part of the facing surface of the divided surface 301 which faces the divided surface 300.

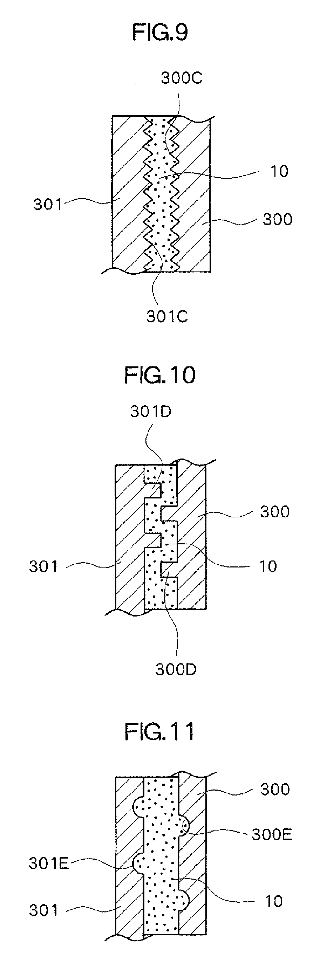

A sixth modified example is shown in Fig. 9. In the sixth modified example, a sawtooth 300C having a sawtooth configuration in cross section is formed on at least a part of the facing surface of the divided surface 300 which faces the divided surface 301. Also, a sawtooth 301C having a sawtooth configuration in cross section is formed on at least a part of the facing surface of the divided surface 301 which faces the divided surface 300.

A seventh modified example is shown in Fig. 10. In the seventh modified example, a plurality of convex portions 300D each having a substantially square configuration in cross section are projected from at least a part of the facing surface of the divided surface 300 which faces the divided surface 301. Also, a plurality of convex portions 301D each having a substantially square configuration in cross section are projected from at least a part of the facing surface of the divided surface 301 which faces the divided surface 300.

An eighth modified example is shown in Fig. 11. In the eighth modified example, a plurality of arc portions 300E each having a concave curve configuration in cross section are recessed in at least a part of the facing surface of the divided surface 300 which faces the divided surface 301. Also, a plurality of arc portions 301E each having a concave curve configuration in cross section are recessed in at least a part of the facing surface of the divided surface 301 which faces the divided surface 300.

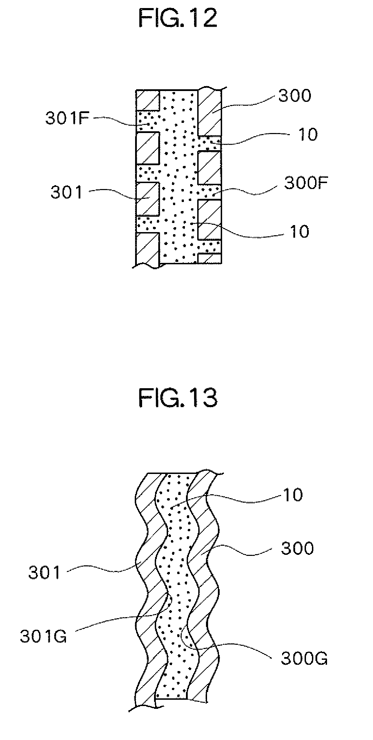

A ninth modified example is shown in Fig. 12. In the ninth modified example, through-holes 300F are defined in at least a part of the facing surface of the divided surface 300 which faces the divided surface 301. Also, through-holes 301F are defined in at least a part of the facing surface of the divided surface 301 which faces the divided surface 300. In this case, the insulator 10 is integrated with the insulator 10 that exists in the through-holes 301F, which can bring about a strong anchor effect.

A tenth modified example is shown in Fig. 13. In the tenth modified example, at least a part of the facing surface of the divided surface 300 which faces the divided surface 301 is formed as a waveform portion 300G. Also, at least a part of the facing surface of the divided surface 301 which faces the divided surface 300 is formed as a waveform portion 301G.

The modified examples of the configuration of the facing surfaces of the divided surface 300 and the divided surface 301 are exemplified by the fifth to tenth modified examples as described above. However, the modified examples of the configuration of the facing surface have only to be configured so that the anchor effect develops with respect to the insulator 10 in a state where one case and another case of the case 2 are electrically insulated from each other to form the case 2. The modified examples of the configuration of the facing surface are not limited to the above-mentioned configurations.

The configurations of the divided surfaces 300 and 301 in those fifth to tenth modified examples as described above are also applied to the second to fourth modified examples.

A notch 7A that is defined on the outer peripheral side of the lid 7 is fitted into the notch 3E of the first side surface 3 and the notches of the second to fourth side surfaces 4, 5, and 6 and attached by welding or the like. Also, the lid 8 is formed integrally with the lower end sides of the first to fourth side surfaces 3, 4, 5, and 6.

The case 2 that is formed as a box having a substantially rectangular solid configuration as shown in Figs. 1 and 2 is made of a metal material that is an electrically conductive material. It is preferable that one case of the case 2 be made of aluminum or aluminum alloy. It is further preferable that the one case be connected with a positive electrode. It is preferable that the metal material be a metal having an electrical conductivity of 1×10⁻⁴Scm⁻¹ or higher. It is preferable that another case of the case 2 be made of a metal material of one kind or an alloy of two or more kinds selected from iron, nickel, copper, chrome, aluminum, zinc, magnesium, and manganese.

The aluminum alloy to be used in the case 2 is an aluminum alloy having an aluminum content of 99% or more of the total weight and including iron, copper, manganese, zinc, magnesium, chromium, nickel, bismuth, lead, or the like. Specific examples include 2000 series aluminum alloys (Al-Cu-Mg-based alloys), 3000 series aluminum alloys (Al-Mn-based alloys), 4000 series aluminum alloys (Al-Si-based alloys), 6000 series aluminum alloys (Al-Mg-Si-based alloys), 7000 series aluminum alloys (Al-Zn-Mg-based alloys), and 8000 series aluminum alloys (Al-Li-based alloys and the like). The elements other than aluminum incorporated in the aluminum alloy can be measured by the atomic absorption method in accordance with JIS H 1306.

Also, the electrical conductivity of the metal material which can be used in the present invention can be specified by finding the inverse number of a conductor resistance which is measured pursuant to JIS C 2525.

The insulator 10 is formed as a frame body having a rectangular configuration as shown in Figs. 1 and 2, and welded between the bends 3C and 3D of the divided surfaces 3A and 3B of the first side surface 3 without any gap. Also, the insulator 10 is welded between the bends of the divided surfaces 4A and 4B of the second side surface 4, between the bends of the divided surfaces 5A and 5B of the third side surface 5, and between the bends of the divided surfaces 6A and 6B of the fourth side surface 6 without any gap. For that reason, the divided surfaces 3A, 4A, 5A, and 6A and the divided surfaces 3B, 4B, 5B, and 6B are firmly fixed to each other by the insulator 10.

Moreover, the insulator 10 is so formed as to surround the case 2 across four surfaces of the six surfaces of the case 2, and also formed across four sides of the twelve sides of the case 2. Also, it is preferable that the insulator 10 have an electrical conductivity of 1×10⁻⁷Scm⁻¹ or lower. More specifically, it is preferable that the insulator 10 be made of a material selected from a thermosetting resin, a thermoplastic resin, a rubber, a fluorine-containing resin, and inorganic oxide.

As the thermosetting resin, there are exemplified a phenol resin, unsaturated polyesters, an epoxy resin, polyimide, and mixtures thereof. As the thermoplastic resin, there are exemplified polyesters such as polyethylene terephthalate and polybutylene terephthalate, polypropylene, polycarbonate, acrylic resins, polyvinyl chloride, polyamide, polyamideimide, polyphenylene sulfide, and mixtures thereof. As the rubber, there are an ethylene-propylene rubber, a butyl rubber, an acrylic rubber, a chlorosulfonated polyethylene rubber, a silicone rubber, a fluororubber, and mixtures thereof. As the fluorine-containing resin, there are exemplified polytetrafluoroethylene, a tetrafluoroethylene-hexafluoropropylene copolymer, polyfluorinated vinylidene, and mixtures thereof. As the inorganic oxide, there are exemplified glasses such as a quartz glass and a soda lime glass, and ceramics. Further, a composition in which a fibrous reinforcing agent formed of the above inorganic oxide is mixed to the above resin component may be used as an insulator.

As shown in Fig. 1, the capacitor main body 11 is configured by alternately laminating positive electrodes 20 that are polarizable electrodes and negative electrodes 30 that are polarizable electrodes on each other through separators (not shown), and is housed in the case 2. The positive electrodes 20, the negative electrodes 30, and the separators are housed in the case 2 so as to be impregnated with an electrolyte solution.

Positive electrode side terminals 21 are welded on the respective positive electrodes 20, and those positive electrode side terminals 21 are bundled together in one group, and are electrically connected to a connection portion 22 (refer to a two-dot chain line shown in Fig. 1) which is formed on an inner wall surface of the divided surface 3A of the first side surface 3 constituting the case 2. For that reason, the divided surfaces 3A, 4A, 5A, and 6A, and the lid 7 in the case 2 form a positive electrode portion.

Negative electrode side terminals 31 are welded on the respective negative electrodes 30, and those negative electrode side terminals 31 are bundled together in one group, and are electrically connected to a connection portion 32 (refer to a two-dot chain line shown in Fig. 1) which is formed on an inner wall surface of the divided surface 3B of the first side surface 3 constituting the case 2. For that reason, the divided surfaces 3B, 4B, 5B, and 68, and the lid 8 form a negative electrode portion.

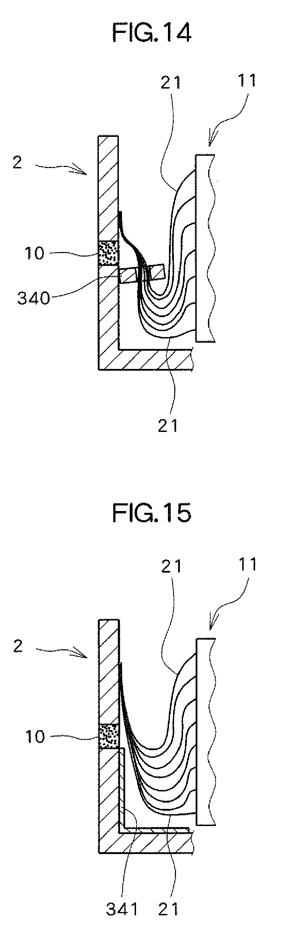

The positive electrode side terminals 21 that have been bundled together in one group shown in Fig. 1 are bent up to the vicinity of the laminated electrodes, a distance between the positive electrode side terminals 21 and the inner surface of the case 2 is reduced, and a dead space within the case 2 is reduced as much as possible. In this case, a device is made in which a distance between the terminals and the inner surface of the case 2 is held so that the bent portions of the terminals other than the joint do not come in contact with the inner surface of a portion of the case 2 which is different in polarity. For example, an appropriate portion of the terminals other than the joint can be covered with a ring made of insulator, a hollow cylinder having open ends, or a film such as a tape, otherwise a film made of insulator may be attached to a portion of the inner surface of the case 2 which comes in contact with the terminals. An eleventh modified example shown in Fig. 14 is an example in which the bundled positive electrode side terminals 21 pass through a ring 340 made of insulator. With the above configuration, the distance between the terminals and the inner surface of the case 2 can be reliably held. A twelfth modified example shown in Fig. 15 is an example in which an insulating film 341 is stuck to a position of the inner surface of the case 2 with which the positive electrode side terminals 21 may come in contact.

When the distance between the positive electrode side terminals 21 and the inner surface of the case 2 is sufficient to insert a thick welding machine therebetween for work, the bundled positive electrode side terminals may be bent toward the case 2 at the joint side, and joined to the inner surface of the case 2. In this case, each of the facing surfaces of the two bundled positive electrode side terminals 21 and negative electrode side terminals 31 is joined to the interior of the case 2.

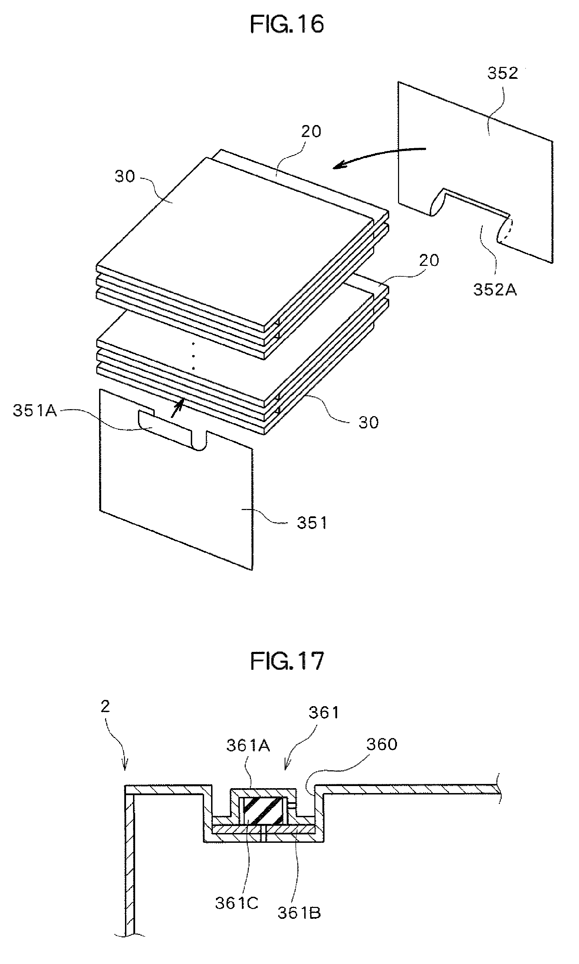

Also, as another method of joining the electrodes to the inner surface of the case, there is a method in which all of the substrates of the positive electrodes 20 and all of the substrates of the negative electrodes 30 which are laminated on each other are extended in different directions that are orthogonal to the laminating direction of the electrodes and oppositely directed by 180 degrees as in the thirteenth modified example shown in Fig. 16. In the method, edges of the extended substrates are welded to electrically conductive flat plates 351 and 352, respectively, and tabs 351A and 352A are drawn out of the electrically conductive flat plates 351 and 352, and joined to the inner surface of the case 2. The positive electrodes 20 and the negative electrodes 30 may be extended in directions different by, for example, 90 degrees.

As another member that is fixed to the case 2, there can be proposed a pressure regulating valve 40. The pressure regulating valve 40 is made of an elastic body such as rubber. The pressure regulating valve 40 is pushed up and opened when an inner pressure of the case 2 increases due to a gas that has been generated when the capacitor main body 11 is charged, and reaches a given pressure, thereby releasing the inner gas of the case 2 to the outside of the case 2. When the inner pressure of the case 2 becomes equal to or lower than the given pressure, the configuration of the pressure regulating valve 40 is restored due to the elasticity, and the pressure regulating valve 40 is closed.

Fig. 2 shows an example of fixing in which the pressure regulating valve 40 is arranged on the outside of the case 2 so as not to project from the outer surface of the case 2, that is, so as to be substantially flush with the outer surface of the case 2. In Fig. 2, the pressure regulating valve 40 may be disposed on one case or another case of the case 2.

As another specific example of fixing of the pressure regulating valve 40, there can be proposed a fourteenth modified example shown in Fig. 17. In the fourteenth modified example, a concave portion 360 having a hole in the center portion thereof that passes through the interior and the exterior of the case 2 is defined in the case 2. A pressure regulating valve 361 per se including a valve body 361C that is surround by an upper lid 361A and a lower lid 361B is screwed into the concave portion 360 of the case 2. A hole that communicates with a gap between the side of the valve body 361C and the inside of the upper lid 361A passes through a side portion or an upper portion of the upper lid 361A. When the pressure regulating valve 361 is provided, a lid (not shown) having a hole so as not to prevent the operation of the pressure regulating valve 361 may be welded to the outer flat surface of the case 2, or the pressure regulating valve 361 may be fixed to the concave portion 360 of the case 2 by a screw (not shown) having a flat plate configuration with a hole.

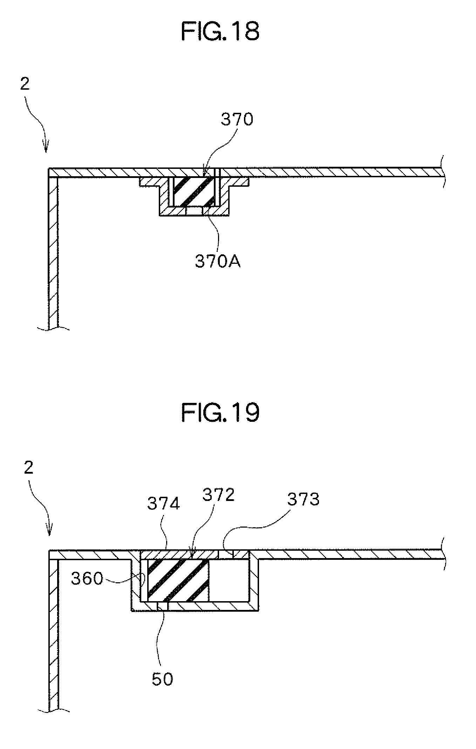

As another specific example, there can be proposed a fifteenth modified example shown in Fig. 18. In the fifteenth modified example, the fixing of a pressure regulating valve 370 to the case 2 may be conducted on the inner surface side of the case 2. In this case, a hole that communicates with a gap on a side of a valve body 370A passes through the case 2.

Further, a supply port 50 for supplying an electrolyte solution to the interior of the case 2 is defined in the case 2. In Fig. 1, the supply port 50 is defined in the divided surface 3B of the first side surface 3 of the case 2. The supply port 50 may be defined in the divided surface 3A or another divided surface as long as the electrolyte solution is not leaked to the outside after the electrolyte solution has been injected into the case 2. In Fig. 1, after the injection of the electrolyte solution, a lid plate 52 is welded to the supply port 50 to seal the case 2. The lid plate 52 may be formed of a screw having a flat plate configuration, and screwed to the case 2 so as to be substantially flush with the surface of the case 2.

The supply port 50 may also serve as a hole that is defined in the case 2 on the lower portion of a valve body 372 which is arranged so as not to project from the outer surface of the case 2, for example, as in a sixteenth modified example shown in Fig. 19. The same is applied to the fourteenth modified example shown in Fig. 17.

In the case of the sixteenth modified example, after the electrolyte solution has been injected from the supply port 50, the valve body 372 is put on the supply port 50, a lid 374 having a hole 373 which releases gas to the outside of the case 2 is welded to the outer surface of the case 2, and the valve body 372 is fixed between the lid 374 and the concave portion 360 of the case 2. The hole 373 that is defined in the lid 374 may communicate with a gap at the side of the valve body 372 so as not to prevent the operation of the valve body 372 which serves as the pressure regulating valve as in the fifteenth modified example shown in Fig. 18. The lid 374 having the hole 373 is welded to the outer surface of the case 2. Alternatively, the lid 374 may be screwed into the opening portion of the concave portion 360 of the case 2 so as to be substantially flush with the outer surface of the case 2 as a screw of the flat plate configuration with a hole.

The above description is given of the configuration of the electric double layer capacitor 1 using the case 2 of this embodiment. The manufacturing process is preferably conducted as the following procedure.

In the case of using the pressure regulating valve 361 shown in Fig. 17, the positive electrodes 20 to which the positive electrode side terminals 21 are welded and the negative electrodes 30 to which the negative electrode side terminals 31 are welded are alternately laminated on each other through the separators to form the capacitor main body 11. Meanwhile, the case 2 except for the lid 7 is formed in advance. Then, the respective positive electrode side terminals 21 are bundled together in one group, and connected to the connection portion 22 within the case 2 except for the lid 7. The respective negative electrode side terminals 31 are also connected to the connection portion 32 in the same manner. In this state, the capacitor main body 11 is housed within the case 2. Then, after the lid 7 has been fixed to the case 2, the electrolyte solution is injected into the case 2 from the hole that is defined in the center portion of the concave portion 360. Finally, the pressure regulating valve 361 is fitted to the concave portion 360 of the case 2 from the outside.

Also, in the case of using the pressure regulating valve 370 (valve body 372) shown in Fig. 18 or 19, the pressure regulating valve (valve body 372) is first fitted from the inside of the case 2. Then, the respective positive side terminals 21 of the capacitor main body 11 are bundled together in one group, and connected to the connection portion 22 of the case 2. The respective negative electrode side terminals 31 are also bundled together in one group, and connected to the connection portion 32 of the case 2. In this state, the capacitor main body 11 is housed within the case 2, and the lid 7 is fixed to the case 2. Finally, the electrolyte solution is injected into the case 2 from the supply port 50. In the case of Fig. 18, the lid plate 52 is fixed onto the supply port 50, and in the case of Fig. 19, the valve body 372 is arranged on the supply port 50, and the lid 374 is attached to fix the valve body 372.

According to the electric double layer capacitor 1 configured as described above, since the case 2 is made of a metal material high in rigidity, even in the case where the electric double layer capacitor 1 is used for a long period of time, the lifetime and the durability of the electric double layer capacitor 1 can be enhanced without conducting time-consuming management in manufacture for preventing damage such as a pin hole from occurring in the case 2 as in the conventional art.

Also, the positive electrode side terminals 21 of the positive electrodes 20 and the negative electrode side terminals 31 of the negative electrodes 30 are connected to the inner wall surface of the case 2. As a result, it is unnecessary to project those respective terminals from the capacitor main body as in the conventional art. The entire electric double layer capacitor 1 including the case 2 can be made compact.

Then, the electric double layer capacitor of the present invention is formed in a rectangular solid configuration. As a result, the plurality of capacitors are used so that the positive electrode portion of one capacitor and the negative electrode portion of another capacitor are so arranged as to be in contact with each other, thereby making it possible to constitute a series type electric double layer capacitor assembly (hereinafter, referred to as "capacitor assembly"). Alternatively, the positive electrode portion of one capacitor and the positive electrode portion of another capacitor, and the negative electrode portion of the one capacitor and the negative electrode portion of the other capacitor are arranged so as to be in contact with each other. This makes it possible to constitute a parallel type electric double layer capacitor assembly. When the joint between the two electric double layer capacitors produces the electric connection, the method such as welding, crimping, or joining through an electrically conductive member is not limited.

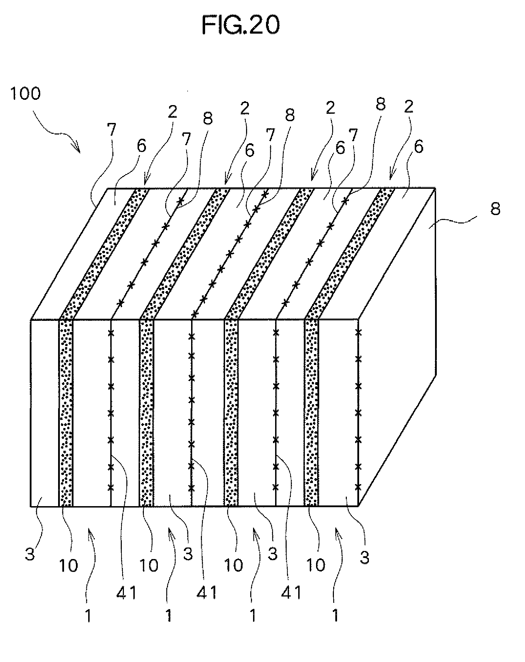

As one specific example, a description is given of an electric double layer capacitor according to a second embodiment of the present invention with reference to Fig. 20. In this embodiment, the same structural elements as those in the first embodiment are denoted by identical reference numerals, and description thereof is omitted.

Referring to Fig. 20, reference numeral 100 denotes an electric double layer capacitor assembly according to this embodiment. The capacitor assembly 100 is configured in such a manner that the plurality of (four) electric double layer capacitors 1 (hereinafter, referred to as "capacitor 1") are arranged in series so that the lids 7 that are the positive electrode portions and the lids 8 that are the negative electrode portions are abutted on (in surface contact with) each other. Then, the peripheral portions of the lids 7 and the peripheral portions of the lids 8 (refer to x-marks of Fig. 20) which are adjacent to each other in those capacitors 1 are welded by the welding portion 41 using laser welding or seam welding.

In this embodiment configured as described above, the plurality of capacitors 1 are arranged in series to join the peripheral portions of the lid 7 and the peripheral portions of the lid 8 by the welding portion 41. As a result, the plurality of capacitors 1 can be electrically connected to each other, thereby making it possible to constitute the capacitor assembly 100 which is compact and large in capacitance.

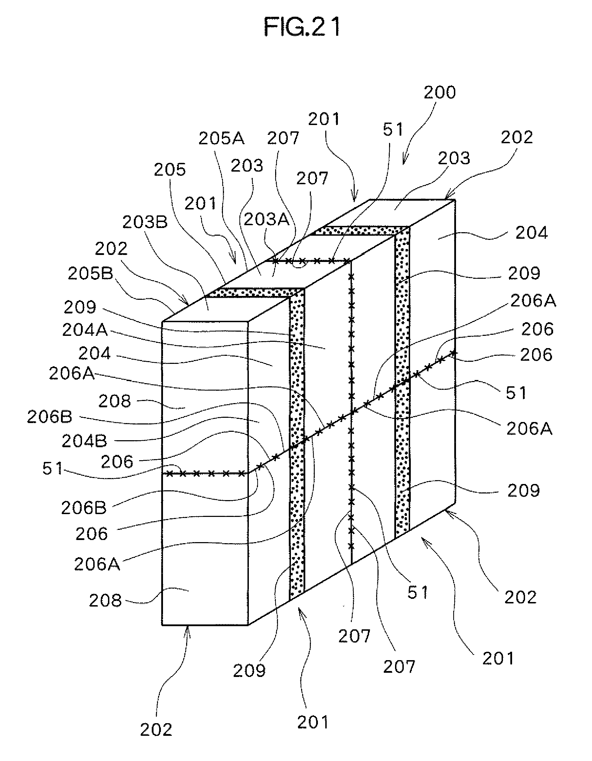

As another specific example, a description is given of an electric double layer capacitor according to a third embodiment with reference to Fig. 21.

Referring to Fig. 21, reference numeral 200 denotes an electric double layer capacitor assembly (hereinafter, referred to as "capacitor assembly") according to this embodiment, and the capacitor assembly 200 is constituted by a plurality of (four) electric double layer capacitors 201 (hereinafter, referred to as "capacitor 201").

Each of the capacitors 201 has a case 202, and the case 202 includes first, second, third, and fourth side surfaces 203, 204, 205, and 206, lids 207 and 208, and an insulator 209. In the case 202, divided surfaces 203A, 204A, 205A, and 206A, and the lid 207 constitute a positive electrode portion. Also, in the case 202, divided surfaces 203B, 204B, 205B, and 206B, and the lid 208 constitute a negative electrode portion.

Then, the plurality of capacitors 201 are arranged in parallel in such a manner that the divided surface 206A and the lid 207 which are the positive electrode portion of one capacitor 201, and the divided surface 206A and the lid 207 which are the positive electrode portion of another capacitor 201 come in contact with each other, respectively. Also, the divided surface 206B which is the negative electrode portion of one capacitor 201 and the divided surface 206B which is the negative electrode portion of another capacitor 201 come in contact with each other. Then, the peripheral portions of the divided surfaces 206A, the peripheral portions of the divided surfaces 206B, and the peripheral portions of the lids 207 (refer to x-marks of Fig. 21), which are adjacent to each other in those capacitors 1 are welded by a welding portion 51 using laser welding or seam welding.

In this embodiment configured as described above, the plurality of capacitors 201 are arranged in parallel, and joined by the welding portion 51. As a result, the plurality of capacitors 201 can be electrically connected to each other, thereby making it possible to constitute the capacitor assembly 200 which is compact and large in capacitance.

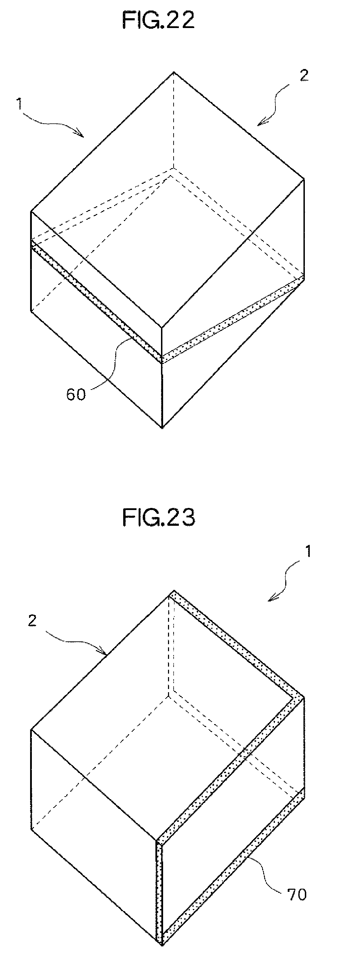

The first embodiment is exemplified by a case in which the insulator 10 crosses four surfaces of the six surfaces of the case 2. However, the present invention is not limited to the above configuration. For example, an insulator 60 may be so arranged as to cross three surfaces of the case 2 as in a seventeenth modified example of the present invention as shown in Fig. 22.

The first embodiment is exemplified by a case in which the insulator 10 crosses four sides of the twelve sides of the case 2. However, the present invention is not limited to the above configuration. For example, an insulator 70 may be so arranged as to extend long six sides of the case 2 as in an eighteenth modified example of the present invention as shown in Fig. 23.

### INDUSTRIAL APPLICABILITY

As has been described above, according to the electric double layer capacitor of the present invention, the rigidity of the case that houses the positive electrode and the negative electrode can be enhanced, the performance and reliability of the electric double layer capacitor can be enhanced, and the entire electric double layer capacitor can be made compact.

## Claims

1. An electric double layer capacitor, comprising:
a pair of electrodes, at least one of which is a polarizable electrode;
a separator; and
an electrolyte solution, wherein
a case that houses the pair of electrodes, the separator, and the electrolyte solution is made of an electrically conductive material, the case is divided in two to give one case and another case, an insulator is arranged along a boundary between the one case and the other case to fix the one case and the other case by the insulator, the one case is connected with a positive electrode of the pair of electrodes, and the other case is connected with a negative electrode of the pair of electrodes.

2. The electric double layer capacitor according to claim 1, wherein the case that houses the pair of electrodes, the separator, and the electrolyte solution is made of a metal material and formed in a rectangular solid configuration, and the insulator which is arranged along the boundary between the one case and the other case has an electrical conductivity of 1×10⁻⁷Scm⁻¹ or lower.

3. The electric double layer capacitor according to claim 1, wherein the one case that is connected with the positive electrode is made of aluminum or aluminum alloy.

4. The electric double layer capacitor according to claim 1, wherein the insulator surrounds the case so as to cross three surfaces or four surfaces of the six surfaces of the case.

5. The electric double layer capacitor according to claim 1, wherein the insulator surrounds the case so as to cross four sides of the twelve sides of the case or extend along six sides of the twelve sides of the case.

6. The electric double layer capacitor according to claim 2, wherein the insulator is made of a material selected from a thermosetting resin, a thermoplastic resin, a rubber, a fluorine-containing resin, and inorganic oxide.

7. The electric double layer capacitor according to claim 1, wherein a metal material of the other case is one kind or an alloy of two or more kinds selected from iron, nickel, copper, chrome, aluminum, zinc, magnesium, and manganese, and has an electrical conductivity of 1×10⁻⁴Scm⁻¹ or higher.

8. A series type electric double layer capacitor, wherein a positive electrode portion of one capacitor and a negative electrode portion of other capacitor of a plurality of the electric double layer capacitors according to claim 2 are arranged so as to be in contact with each other.

9. A parallel type electric double layer capacitor, wherein a positive electrode portion of one capacitor and a positive electrode portion of other capacitor, and a negative electrode portion of the one capacitor and a negative electrode portion of the other capacitor of a plurality of the electric double layer capacitors according to claim 2 are arranged so as to be in contact with each other.
